# EUROPÄISCHE PATENTANMELDUNG

(11) **EP 4 148 676 A1**
(43) Veröffentlichungstag der Anmeldung: **15.03.2023**
(21) Anmeldenummer: 21196486.1
(22) Anmeldetag: 14.09.2021
(51) Int. Cl.: G06T 11/00

(54) **REKONSTRUKTIONSVERFAHREN FÜR DVT MIT BEWEGUNGSARTEFAKTREDUKTION**

(71) Anmelder: DENTSPLY SIRONA Inc., York, PA 17401 (US); Sirona Dental Systems GmbH, 64625 Bensheim (DE)
(72) Erfinder: Hülsbusch, Markus, 64625 Bensheim (DE); Maur, Susanne, 64625 Bensheim (DE)
(74) Vertreter: Özer, Alpdeniz

(57) **Zusammenfassung**

Die Vorliegende Erfindung betrifft ein Computer gestütztes Verfahren zur Rekonstruktion einer DVT Aufnahme im dentalen Bereich, umfassend die folgenden Schritte:
(S1) Bereitstellen eines Sinogramms und einer initialen Projektionsgeometrie; (S2) Geometrische Kalibrierung durch Variation der Projektionsgeometrie und Bewertung der variierten Projektionsgeometrie mittels Datenkonsistenzbedingungen, welche aus einem ersten Volumen abgeleitet werden, welches mittels der variierten Projektionsgeometrie in einem ersten Rekonstruktionsverfahren aus dem Sinogramm erzeugt wird, wobei das erste Rekonstruktionsverfahren erste Rekonstruktionsparameter verwendet;
(S3) Erzeugung eines finalen Volumens mit einem finalen Rekonstruktionsverfahren mit der variierten Projektionsgeometrie und finalen Rekonstruktionsparametern aus dem Sinogramm, gekennzeichnet dadurch, dass das erste Rekonstruktionsverfahren und das finale Rekonstruktionsverfahren identische Rekonstruktionsverfahren sind, und die ersten Rekonstruktionsparameter sich von den finalen Rekonstruktionsparametern in mindestens einem oder mehreren Werten der Rekonstruktionsparameter unterscheiden; oder das das erste Rekonstruktionsverfahren und das finale Rekonstruktionsverfahren unterschiedliche Rekonstruktionsverfahren sind, und die ersten Rekonstruktionsparameter sich von den finalen Rekonstruktionsparametern in mindestens einem oder mehreren der Rekonstruktionsparameter oder deren Werten unterscheiden.

## Beschreibung

### TECHNISCHES GEBIET DER ERFINDUNG

Die vorliegende Erfindung betrifft ein System und ein Verfahren insbesondere ein Rekonstruktionsverfahren u.a. zur geometrischen Kalibrierung einer digitalen Volumen Tomographie (DVT) Aufnahme im dentalen Bereich zur Kompensation von Bewegungsartefakten im rekonstruierten Volumen.

### HINTERGRUND DER ERFINDUNG

Im Allgemeinen stehen bei einer DVT-Aufnahme die bildgebenden Komponenten des Röntgengeräts, Röntgenstrahler und Röntgendetektor, einander gegenüber und rotieren um den Patienten. Hierbei wird eine Sequenz von Röntgenprojektionen erzeugt, welche ein Sinogramm bilden. Üblicherweise wird gemäß eines Rekonstruktionsverfahren unter Kenntnis der Projektionsgeometrie aus dem Sinogramm ein Volumen rekonstruiert, welches zur Diagnose angezeigt wird. Die Projektionsgeometrie beschreibt die geometrischen Eigenschaften des Röntgengeräts und dessen Trajektorie während der Aufnahme. Sie kann mittels Projektionsmatrizen ausgedrückt werden. Alternativ können andere bekannte Repräsentationsformen verwendet werden.

Bewegt sich der Patient während der DVT-Aufnahme oder ist die Kalibrierung des Röntgengeräts veraltet wird im Rekonstruktionsverfahren eine ungeeignete Projektionsgeometrie angewendet. Dies führt zu Bewegungsartefakten im rekonstruierten Volumen aufgrund der Verrechnung inkonsistenter Daten. Als Gegenmaßnahme wird im Allgemeinen ein Verfahren zur Bewegungs-Artefakt-Kompensation (MAC), bzw. zur geometrischen Kalibrierung der Aufnahme benutzt, welche die Projektionsgeometrie aus einer gegebenen Patientenaufnahme durch Bewertung der Datenkonsistenz schätzt.

Die meisten bekannten MAC-Verfahren verwenden intern ebenfalls ein Rekonstruktionsverfahren, um die Datenkonsistenz mithilfe eines rekonstruierten Volumens zu bewerten. Hierbei ist es üblich, das gleiche Rekonstruktionsverfahren mit den gleichen Parametern zu verwenden, wie es für die Rekonstruktion des Volumens zur Diagnose verwendet wird. Manche bekannte MAC-Verfahren generieren auch ein Volumen als Ausgabe, welches auch alternativ direkt zur Diagnose verwendet werden kann.

Generell sind MAC-Verfahren rechenintensiv und führen daher zu langen Rechenzeiten. Auch sind sie oft nicht robust im Ergebnis, weil Bildartefakte das Ergebnis beeinflussen können.

### OFFENBARUNG DER ERFINDUNG

Ziel der vorliegenden Erfindung ist ein Verfahren zur Rekonstruktion einer DVT-Aufnahme im dentalen Bereich mit einem Verfahren zur Bewegungs-Artefakt-Kompensation bereitzustellen.

Dieses Ziel wird durch das Verfahren nach Anspruch 1 erreicht. Die Gegenstände der abhängigen Ansprüche beziehen sich auf bevorzugte Ausführungsformen bzw. Weiterentwicklungen.

Das erfindungsgemäße Computer-gestützte Verfahren dient zur Rekonstruktion einer DVT Aufnahme im dentalen Bereich. Es umfasst die folgenden Schritte:
(S1) Bereitstellen eines Sinogramms und einer initialen Projektionsgeometrie;
(S2) Geometrische Kalibrierung durch Variation der Projektionsgeometrie und Bewertung der variierten Projektionsgeometrie mittels Datenkonsistenzbedingungen, welche aus einem ersten Volumen abgeleitet werden, welches mittels der variierten Projektionsgeometrie in einem ersten Rekonstruktionsverfahren aus dem Sinogramm erzeugt wird, wobei das erste Rekonstruktionsverfahren erste Rekonstruktionsparameter verwendet;
(S3) Erzeugung eines finalen Volumens mit einem finalen Rekonstruktionsverfahren mit der variierten Projektionsgeometrie und finalen Rekonstruktionsparametern aus dem Sinogramm, wobei
   das erste Rekonstruktionsverfahren und das finale Rekonstruktionsverfahren identische Rekonstruktionsverfahren sind, und die ersten Rekonstruktionsparameter sich von den finalen Rekonstruktionsparametern in mindestens einem oder mehreren Werten der Rekonstruktionsparameter unterscheiden; oder
   das das erste Rekonstruktionsverfahren und das finale Rekonstruktionsverfahren unterschiedliche Rekonstruktionsverfahren sind, und die ersten Rekonstruktionsparameter sich von den finalen Rekonstruktionsparametern in mindestens einem oder mehreren der Rekonstruktionsparameter oder deren Werten unterscheiden.

Ein wesentliches Merkmal der vorliegenden Erfindung ist die Verwendung von zwei unterschiedlichen Rekonstruktionsverfahren. Ein wesentlicher vorteilhafter Effekt der vorliegenden Erfindung ist, dass die Rekonstruktionsverfahren für den jeweiligen Anwendungszweck optimiert werden können. Das erste Rekonstruktionsverfahren wird für eine reduzierte Rechenzeit und/oder ein robustes Ergebnis des MAC-Verfahrens angepasst. Dies kann insbesondere erreicht werden durch eine geringere Auflösung oder Größe des ersten Volumens oder durch eine gröbere zeitliche oder örtliche Unterabtastung des Sinogramms. Insbesondere können auch die Größe und Lage des ersten Volumens auf geeignete anatomische Strukturen beschränkt werden oder die Größe und Lage des ersten Volumens auf Strukturen außerhalb des vollständig erfassten Bereichs erweitert werden. Insbesondere können die genannten Ziele auch durch das Hinzufügen oder das Weglassen oder die unterschiedliche Umsetzung oder das unterschiedliche Parametrisieren von Datenbearbeitungs- oder Korrekturschritten erreicht werden. Das finale Rekonstruktionsverfahren wird für die Berechnung eines Volumens mit optimalem, gewohntem und/oder durch den Benutzer konfigurierbaren Bildeindruck für die Diagnose angepasst. Dies kann insbesondere erreicht werden durch eine geeignete Wahl der Auflösung, der Größe und der Lage des ersten Volumens, welche durch die Projektionsgeometrie während der DVT-Aufnahme und die abbildbare Auflösung der Röntgenprojektionen bedingt werden. Insbesondere erfolgt die Verwendung aller geeigneten Informationen des Sinogramms. Insbesondere kann der Bildeindruck auch durch das Hinzufügen oder das Weglassen oder die unterschiedliche Umsetzung oder das unterschiedliche Parametrisieren von Datenbearbeitungs- oder Korrekturschritten erreicht werden.

### KURZBESCHREIBUNG DER ZEICHNUNGEN

In der nachfolgenden Beschreibung wird die vorliegende Erfindung anhand von beispielhaften Ausführungsformen und unter Bezugnahme auf die Zeichnungen näher erläutert, wobei
Abb.1 - zeigt eine schematische Darstellung eines extraoralen Röntgensystems nach einer Ausführungsform;
Abb.2 - zeigt ein Flussdiagram gemäß einer Ausführungsform der Erfindung;
Abb.3 - zeigt ein Flussdiagram gemäß einer weiteren Ausführungsform der Erfindung;

Die in den Zeichnungen gezeigten Referenznummern bezeichnen die unten aufgeführten Elemente, auf die in der nachfolgenden Beschreibung der beispielhaften Ausführungsformen Bezug genommen wird.
1. Extraorales Röntgensystem
2. Röntgengerät
3. Röntgenstrahler
4. Röntgendetektor
5. Bedienungseinheit
6. Kopffixierung
7. Aufbiss
8. Rechner
9. Anzeige

Das Computer-gestütztes Verfahren dient zur Rekonstruktion einer DVT Aufnahme im dentalen Bereich. Es umfasst die folgenden Schritte: (S1) Bereitstellen eines Sinogramms und einer initialen Projektionsgeometrie; (S2) Geometrische Kalibrierung durch Variation der Projektionsgeometrie und Bewertung der variierten Projektionsgeometrie mittels Datenkonsistenzbedingungen, welche aus einem ersten Volumen abgeleitet werden, welches mittels der variierten Projektionsgeometrie in einem ersten Rekonstruktionsverfahren aus dem Sinogramm erzeugt wird, wobei das erste Rekonstruktionsverfahren erste Rekonstruktionsparameter verwendet; (S3) Erzeugung eines finalen Volumens mit einem finalen Rekonstruktionsverfahren mit der variierten Projektionsgeometrie und finalen Rekonstruktionsparametern aus dem Sinogramm. Wobei das erste Rekonstruktionsverfahren und das finale Rekonstruktionsverfahren identische Rekonstruktionsverfahren sind, und die ersten Rekonstruktionsparameter sich von den finalen Rekonstruktionsparametern in mindestens einem oder mehreren Werten der Rekonstruktionsparameter unterscheiden; oder das das erste Rekonstruktionsverfahren und das finale Rekonstruktionsverfahren unterschiedliche Rekonstruktionsverfahren sind, und die ersten Rekonstruktionsparameter sich von den finalen Rekonstruktionsparametern in mindestens einem oder mehreren der Rekonstruktionsparameter oder deren Werten unterscheiden.

In einer bevorzugten Ausführungsform beschreibt mindestens einer der ersten Rekonstruktionsparameter die Auflösung des ersten Volumens. Und mindestens einer der finalen Rekonstruktionsparametern beschreibt die Auflösung des finalen Volumens. Die Auflösung des ersten Volumens unterscheidet sich von der Auflösung des finalen Volumens und ist vorzugsweise geringer. Durch die geringere Auflösung des ersten Volumens verringert sich die Rechenzeit des ersten Rekonstruktionsverfahrens und möglicher nachfolgender Rechenoperationen im MAC-Verfahren. Somit wird die Rechenzeit des gesamten MAC-Verfahren signifikant reduziert. Eine geringere Auflösung des ersten Volumens führt zu dem zu einer stärkeren Mittelung der Informationen aus den einzelnen Röntgenprojektionen, so dass das Signalrauschen und andere typische Bildartefakte der DVT-Bildgebung abgeschwächt werden. Dies erhöht die Robustheit des MAC-Verfahrens gegenüber den Bildartefakten. Über die Auflösung des ersten Volumens kann oft auch die Genauigkeit des MAC-Verfahrens beeinflusst werden. Eine geringere Auflösung ermöglicht eine Korrektur von großen Bewegungsfehlern, wohingegen eine hohe Auflösung eine Korrektur von kleinen Bewegungen ermöglicht. Hierfür kann die Auflösung des ersten Volumens auch höher als die Auflösung des finalen Volumens gewählt werden. Die optimale Auflösung des finalen Volumens ergibt sich meist aus der Systemauflösung des Röntgengeräts, welche durch die technischen Eigenschaften der bildgebenden Komponenten und der Geometrie und Trajektorie des Röntgengeräts definiert ist.

In einer weiteren bevorzugten Ausführungsform beschreibt mindestens einer der ersten Rekonstruktionsparameter eine erste zeitliche Unterabtastung des Sinogramms. Und mindestens einer der finalen Rekonstruktionsparametern beschreibt eine zweite zeitliche Unterabtastung des Sinogramms. Die erste zeitliche Unterabtastung des Sinogramms unterscheidet sich von der zweiten zeitlichen Unterabtastung des Sinogramms und ist vorzugsweise gröber. Durch die gröbere erste zeitliche Unterabtastung des Sinogramms verringert sich die Rechenzeit des ersten Rekonstruktionsverfahrens und somit auch die Rechenzeit des MAC-Verfahrens. Die möglicherweise durch die gröbere erste zeitliche Unterabtastung entstehenden Bildartefakte sind durch geeignete Bildverarbeitungsverfahren, zum Beispiel durch einen Glättungsfilter, zu mindern, um die Robustheit des MAC-Verfahrens nicht zu beeinträchtigen. Die zeitliche Unterabtastung des Sinogramms kann durch Selektion der verwendeten Projektionswinkel erfolgen. Bei der zeitlichen Unterabtastung kann es sich hierbei um eine regelmäßige Abtastung handeln, zum Beispiel durch Selektion eines jeden zweiten Projektionsbildes, oder es kann sich um die Selektion eines Winkelbereichs handeln, zum Beispiel einen Winkelbereich mit besonders viel oder wenig Bewegung. Die zweite zeitliche Unterabtastung verwendet meist alle Projektionsbilder, damit das finale Volumen den besten Bildeindruck für die Diagnose bietet und die aufgenommenen Informationen vollständig darstellt.

In einer weiteren bevorzugten Ausführungsform beschreibt mindestens einer der ersten Rekonstruktionsparameter eine erste örtliche Unterabtastung des Sinogramms. Und mindestens einer der finalen Rekonstruktionsparametern beschreibt eine zweite örtliche Unterabtastung des Sinogramms. Die erste örtliche Unterabtastung des Sinogramms unterscheidet sich von der zweiten örtlichen Unterabtastung des Sinogramms und ist vorzugsweise gröber. Durch die gröbere erste örtliche Unterabtastung des Sinogramms verringert sich die Rechenzeit des ersten Rekonstruktionsverfahrens und somit auch die Rechenzeit des MAC-Verfahrens. Die örtliche Unterabtastung des Sinogramms sollte auf die Auflösung des jeweiligen Volumens abgestimmt sein. Die örtliche Unterabtastung des Sinogramms kann durch Selektion bzw. Interpolation der verwendeten Pixelinformationen erfolgen. Die zweite örtliche Unterabtastung verwendet meist alle Pixelinformationen, damit das finale Volumen den besten Bildeindruck für die Diagnose bietet und die aufgenommenen Informationen vollständig darstellt.

In einer weiteren bevorzugten Ausführungsform beschreibt mindestens einer der ersten Rekonstruktionsparameter die Größe und/oder Lage des ersten Volumens. Und mindestens einer der finalen Rekonstruktionsparametern beschreibt die Größe und/oder Lage des finalen Volumens. Die Größe und/oder Lage des ersten Volumens unterscheidet sich von der Größe und/oder Lage des finalen Volumens. Nach einer ersten Alternative kann vorzugsweise die Größe des ersten Volumens kleiner sein, welches den Vorteil einer verringerten Rechenzeit bietet. Zudem kann das erste Volumen auf einen oder mehrere Bereiche mit viel oder wenig Bewegung beschränkt werden oder auf Bereiche, welche geeignete anatomische Strukturen für das MAC-Verfahren enthalten. Dies erhöht die Robustheit und/oder verbessert die Konvergenz des MAC-Verfahrens. Nach einer zweiten Alternative kann die Größe des ersten Volumens größer sein. Dies ermöglicht die Berücksichtigung geeigneter anatomischer Strukturen außerhalb des vollständig erfassten Bereichs im MAC-Verfahren. Dies bietet den Vorteil einer besseren Konvergenz oder eines robusteren Ergebnisses des MAC Verfahrens. Die Nachteile der erhöhten Rechenzeit können durch Verringerung der Volumenauflösung oder Unterabtastung des Sinogramms kompensiert werden. Die Größe und/oder Lage des finalen Volumens kann für die Diagnose passend gewählt werden. Meist umfasst das finale Volumen den gesamten vollständig erfassten Bereich, welcher in einem ausreichenden Winkelbereich erfasst wurde, zum Beispiel in einem Winkelbereich von mindestens 180° Rotation. Das finale Volumen wird meist nicht auf Bereiche außerhalb des vollständig erfassten Bereichs erweitert, da dort Winkel-abhängige Bildartefakte auftreten. Ein MAC Verfahren kann Winkel-abhängigen Bildartefakte bei der Auswertung des ersten Volumens teilweise kompensieren. Vorzugsweise umfasst die Lage des ersten Volumens mindestens einen teilweise bezahnten Bereich. Die Lage des Volumens kann durch Translation und/oder Rotation festgelegt werden.

Bei einer DVT-Aufnahme eines Patienten können vielfältige Bildartefakte in einem rekonstruierten Volumen auftreten. Manche dieser Bildartefakte beeinträchtigen primär die Robustheit des MAC-Verfahrens, andere beeinträchtigen primär die Diagnose. Aus Gründen der Laufzeit und der Robustheit des MAC-Verfahrens werden in den folgenden Ausführungsformen die Bildartefakte sowie die Bildinhalte im ersten Rekonstruktionsverfahren und im finalen Rekonstruktionsverfahren unterschiedlich behandelt. Relevante Bildartefakte sind hierbei unter anderem: Cupping-Artefakte aufgrund von Strahlaufhärtung, Metallartefakte aufgrund von stark absorbierenden Materialien, Windmühlenartefakte aufgrund von Winkelunterabtastung, Rauschen aufgrund von niedriger Dosis, Streak-Artefakte aufgrund von stark absorbierenden Materialien oder Streustrahlung oder diversen anderen Ursachen, Trunkierungs-Artefakte aufgrund des begrenzten Größe des Aufnahmevolumens, Kegelstrahlartefakte aufgrund der Aufnahmegeometrie des Röntgengeräts für DVT-Aufnahmen, Bewegungsartefakte aufgrund von Patientenbewegung oder fehlerhafter Kalibrierung des Röntgengeräts.

In einer weiteren bevorzugten Ausführungsform schließt das erste Rekonstruktionsverfahrens einen Schritt zum Korrigieren von Bildartefakten ein, wobei das finale Rekonstruktionsverfahren denselben Korrekturschritt nicht einschließt. Der zusätzliche Schritt zur Korrektur von Bildartefakten verbessert die Konvergenz des MAC-Verfahrens. Zum Beispiel können durch Glättung des ersten Volumens Bildartefakte unterdrückt und somit die Auswertung der Datenkonsistenz des ersten Volumens vereinfacht werden. Der gleiche Schritt zur Korrektur von Bildartefakten wird im finalen Rekonstruktionsverfahren nicht angewandt, um im finalen Volumen den besten Bildeindruck für die Diagnose zu erzielen und die aufgenommenen Informationen möglichst unverfälscht darzustellen. Alternativ schließt das finale Rekonstruktionsverfahren einen Schritt zum Korrigieren von Bildartefakten ein, wobei das erste Rekonstruktionsverfahren denselben Korrekturschritt nicht einschließt. Das Auslassen des Korrekturschritts im ersten Rekonstruktionsverfahren führt zu einer verkürzten Rechenzeit des ersten Rekonstruktionsverfahrens. Im finalen Rekonstruktionsverfahren ist die Rechenzeit oft nicht so kritisch wie im ersten Rekonstruktionsverfahren, daher können alle Korrekturschritte durchgeführt werden, welche den Bildeindrück für die Diagnose verbessern. Alternativ schließen beide der ersten Rekonstruktionsverfahrens und des finalen Rekonstruktionsverfahrens jeweils einen Schritt zum Korrigieren von Bildartefakten ein, wobei diese unterschiedlich sind, oder jeweils den gleichen Schritt zum Korrigieren von Bildartefakten einschließen aber diese unterschiedlich parametrisiert sind. Werden unterschiedliche Schritte zur Korrektur der gleichen Bildartefakte verwendet, so kann der Korrekturschritt im ersten Rekonstruktionsverfahren auf Rechenzeit oder Konvergenz des MAC-Verfahrens optimiert werden und der Korrekturschritt im finalen Rekonstruktionsverfahren auf den besten Bildeindruck optimiert werden. Werden die gleichen Korrekturschritte in beiden Rekonstruktionsverfahren mit unterschiedlicher Parametrisierung verwendet, so kann die Parametrisierung im ersten Rekonstruktionsverfahren auf Rechenzeit oder Konvergenz des MAC-Verfahrens optimiert werden und die Parametrisierung im finalen Rekonstruktionsverfahren auf Bildeindruck optimiert werden.

In einer weiteren bevorzugten Ausführungsform dient der Schritt zum Korrigieren von Bildartefakten zur Reduzierung von Metallartefakten oder Kegelstrahlartefakten oder Streustrahlartefakten. Diese Korrekturschritte erfordern meist eine lange Rechenzeit, um gute Korrekturergebnisse zu erzielen. Vorzugsweise ist daher im ersten Rekonstruktionsverfahren ein Korrekturschritt so zu wählen oder zu parametrisieren, dass er eine geringe Laufzeit aufweist. Alternativ wird die Stärke oder die Qualität des Korrekturschritts angepasst, um eine geringe Rechenzeit oder eine gute Konvergenz des MAC-Verfahrens zu bewirken. Alternativ wird der Korrekturschritt im ersten Rekonstruktionsverfahren gar nicht verwendet, um die Rechenzeit des MAC-Verfahrens zu reduzieren. Vorzugsweise ist im finalen Rekonstruktionsverfahren der Korrekturschritt so zu wählen oder so zu parametrisieren, dass der Bildeindruck für die Diagnose verbessert wird.

In einer weiteren bevorzugten Ausführungsform schließt das finale Rekonstruktionsverfahren einen Schritt zur Nachbearbeitung des finalen Volumens ein, wobei das erste Rekonstruktionsverfahren denselben Nachbearbeitungsschritt nicht einschließt. Dies bietet den Vorteil, dass im ersten Rekonstruktionsverfahren durch das Auslassen des Schrittes die Rechenzeit reduziert wird, wohin gegen im finalen Rekonstruktionverfahren der Schritt den Bildeindruck für die Diagnose verbessert. Ein Beispiel für einen Schritt zur Nachbearbeitung des finalen Volumens ist eine Grauwertanpassung für die Darstellung und Vergleichbarkeit in der Anzeige oder eine Rauschreduktion oder eine Kontrast-Verstärkung. Diese sind für den Verwendungszweck des ersten Volumens im MAC-Verfahren meist nicht erforderlich. Alternativ schließen beide des ersten Rekonstruktionsverfahren und des finalen Rekonstruktionsverfahren jeweils einen Schritt zur Nachbearbeitung des ersten und des finalen Volumens ein, wobei diese unterschiedlich sind, oder jeweils den gleichen Nachbearbeitungsschritt einschließen, aber diese unterschiedlich parametrisiert sind. Vorzugsweise ist im ersten Rekonstruktionsverfahren ein Schritt zur Nachbearbeitung so zu wählen oder zu parametrisieren, dass er eine geringe Laufzeit aufweist. Vorzugsweise ist im finalen Rekonstruktionsverfahren der Schritt zur Nachbearbeitung so zu wählen oder zu parametrisieren, dass der Bildeindruck für die Diagnose verbessert wird.

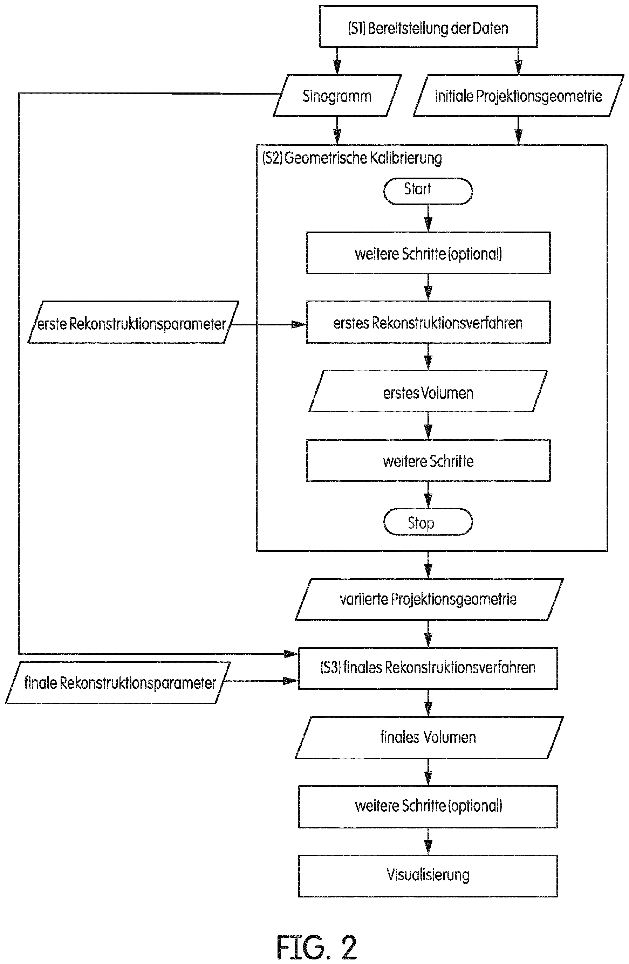

Abbildung 2 zeigt eine weitere bevorzugte Ausführungsform, in der das erste Rekonstruktionsverfahren einen Schritt zur Vorbearbeitung des Sinogramms oder zur Nachbearbeitung des ersten Volumens einschließt, wobei das finale Rekonstruktionsverfahren denselben Vor- oder Nachbearbeitungsschritt nicht einschließt. Eine Vorbearbeitung des Sinogramms, wie beispielsweise eine Glättung oder Kantenerhaltende Glättung, führt zu einer Reduktion des Rauschens und kleiner Bildartefakte im ersten Volumen. Ein ähnlicher Effekt lässt sich durch eine direkte Nachbearbeitung des ersten Volumens erzielen. Diese Vor- und Nachbearbeitungsschritte sind im ersten Rekonstruktionsverfahren vorteilhaft, da sie die Robustheit des MAC-Verfahrens erhöhen. Das Auslassen dieser Vor- und Nachbearbeitungsschritte im finalen Rekonstruktionsverfahren führt zu einem besseren Bildeindruck des finalen Volumens für die Diagnose und einer vollständigeren Darstellung der relevanten Informationen.

Alternativ schließen beide der ersten Rekonstruktionsverfahren und des finalen Rekonstruktionsverfahren jeweils einen Schritt zur Vorbearbeitung des Sinogramms oder zur Nachbearbeitung des ersten und des finalen Volumens ein, wobei diese unterschiedlich sind, oder jeweils den gleichen Vor- oder Nachbearbeitungsschritt einschließen aber diese unterschiedlich parametrisiert sind. Vorzugsweise sind im ersten Rekonstruktionsverfahren die Schritte zur Vor- und Nachbearbeitung so zu wählen oder zu parametrisieren, dass die Robustheit des MAC-Verfahrens erhöht wird. Vorzugsweise sind im finalen Rekonstruktionsverfahren die Schritte zur Vor- und Nachbearbeitung so zu wählen oder zu parametrisieren, dass der Bildeindruck für die Diagnose verbessert wird und eine vollständige Darstellung der relevanten Informationen erreicht wird.

In einer weiteren bevorzugten Ausführungsform dient der Nachbearbeitungsschritt zur Grauwertanpassung, oder zur Kanten-erhaltenden Glättung bzw. Rauschreduktion.

In einer weiteren bevorzugten Ausführungsform dient der Vor- und Nachbearbeitungsschritt zur Rauschreduktion oder zur Kanten-erhaltenden Rauschreduktion oder zur Kanten-Verstärkung oder zur Unterdrückung von Trunki erungsartefakten.

In einer weiteren bevorzugten Ausführungsform handelt es sich bei der geometrischen Kalibrierung um ein iteratives Verfahren, wobei der Schritt zum Korrigieren von Bildartefakten oder dessen Parametrisierung während der Iterationen verändert werden. Manche Schritte zum Korrigieren von Bildartefakten erfordern die Kenntnis der Projektionsgeometrie, um ein gutes Korrekturergebnis zu erzielen. Bei Fehlern in der Projektionsgeometrie liefern sie schlechtere oder unsichere Korrekturergebnisse. Auch sind die Ergebnisse mancher Schritte zum Korrigieren von Bildartefakten nur dann relevant, wenn ein geringer Fehler der Projektionsgeometrie vorliegt. Bei einem iterativen MAC-Verfahren kann angenommen werden, dass die Fehler der Projektionsgeometrie in jeder Iteration verringert werden. Somit ist es von Vorteil, den Schritt zum Korrigieren von Bildartefakten oder dessen Parametrisierung während der Iterationen anzupassen. Es kann zum Beispiel die Stärke der Korrektur oder die Größe von Sicherheitsabständen angepasst werden. Somit wird die Robustheit und Genauigkeit des MAC-Verfahrens erhöht oder die Rechenzeit reduziert. In frühen Iterationen kann der Schritt zum Korrigieren von Bildartefakten auf die Korrektur von größeren Fehlern der Projektionsgeometrie ausgerichtet werden, in späten Iterationen kann der Schritt zum Korrigieren von Bildartefakten auf die Korrektur von kleineren Fehlern der Projektionsgeometrie ausgerichtet werden.

In einer weiteren bevorzugten Ausführungsform handelt es sich bei der geometrischen Kalibrierung um ein iteratives Verfahren, wobei der Schritt zur Vor- und Nachbearbeitung oder dessen Parametrisierung während der Iterationen verändert werden. Bei einem iterativen MAC-Verfahren kann angenommen werden, dass die Fehler der Projektionsgeometrie in jeder Iteration verringert werden. Somit erhöht sich die Genauigkeit des ersten Volumens in jeder Iteration. Dies führt zu einer veränderten Darstellung der anatomischen Strukturen und möglicher Bildartefakte im ersten Volumen. Eine Anpassung des Schrittes zur Vor- und Nachbearbeitung oder dessen Parametrisierung während der Iterationen hat den Vorteil, dass die Robustheit und Genauigkeit des MAC-Verfahrens erhöht werden kann. In frühen Iterationen kann der Schritte zur Vor- und Nachbearbeitung auf die Korrektur von größeren Fehlern der Projektionsgeometrie ausgerichtet werden, in späten Iterationen kann der Schritte zur Vor- und Nachbearbeitung auf die Korrektur von kleineren Fehlern der Projektionsgeometrie ausgerichtet werden.

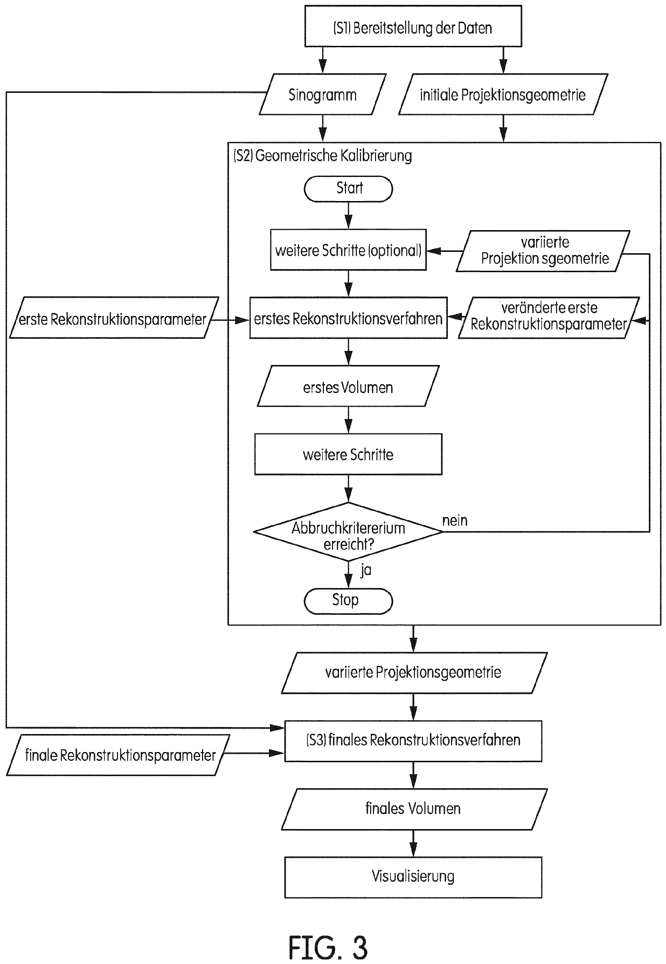

Abbildung 3 zeigt eine weitere bevorzugte Ausführungsform, in der es sich bei der geometrischen Kalibrierung um ein iteratives Verfahren handelt, wobei die ersten Rekonstruktionsparameter während der Iterationen verändert werden. Bei einem iterativen MAC-Verfahren kann angenommen werden, dass die Fehler der Projektionsgeometrie in jeder Iteration verringert werden. In späteren Iterationen kann daher durch Anpassung der ersten Rekonstruktionsparameter die Detaildarstellung im ersten Volumen erhöht werden und somit die Genauigkeit des MAC-Verfahrens verbessert werden. In frühen Iterationen ist es hingegen von Vorteil, die ersten Rekonstruktionsparameter für die Reduktion der Rechenzeit oder die Robustheit bei großen Fehlern der Projektionsgeometrie des MAC-Verfahrens anzupassen. Um diese Ziele zu erreichen wird die Auflösung des ersten Volumens während der Iterationen vorzugsweise erhöht, die zeitliche und örtliche Unterabtastung des Sinogramms während der Iterationen vorzugsweise verringert und die Größe und Lage des Volumens während der Iterationen vorzugsweise von groben anatomischen Strukturen zu feinen Strukturen hin angepasst. Zusammen gefasst ermöglicht ein iteratives MAC-Verfahren mit sich erhöhender Detaildarstellung während der Iterationen eine erhöhte Robustheit des MAC-Verfahrens bezüglich unterschiedlich großer Bewegungen und reduziert dessen Rechenzeit.

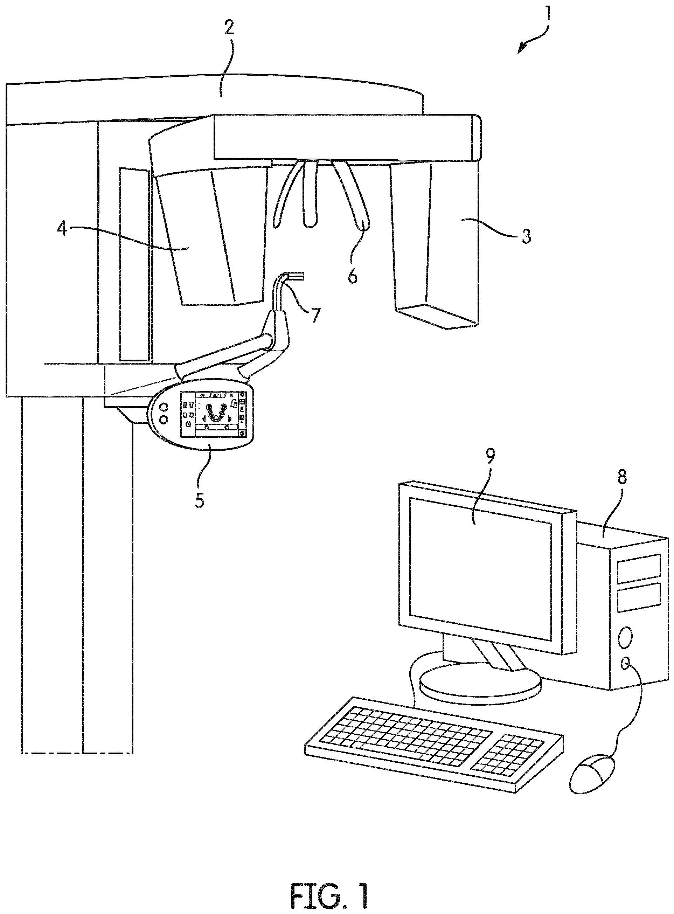

Das erfindungsgemäße Verfahren ist ein Computer-implementierbares Verfahren, und kann auf einem computergestützten DVT-System (1) ausgeführt werden. Abb. 1 zeigt ein Ausführungsbespiel für ein DVT-System (1). Hierzu umfasst die vorliegende Erfindung auch ein Computerprogramm mit computerlesbarem Code. Das Computerprogramm kann auf einem Speichermedium bereitgestellt werden. Das computergestützte DVT-System (1) umfasst ein Röntgengerät (2) zur Durchführung der Patientenaufnahme, wobei die 2D Röntgenbilder bzw. das Sinogramm erzeugt wird. Das Röntgengerät (2) hat einen Röntgenstrahler (3) und Röntgendetektor (4), die während der Aufnahme um den Patiententkopf gedreht werden. Die Trajektorie des Röntgenstrahlers (3) und des Röntgendetektors (4) während der Aufnahme kann eine Kreisbahn beschreiben. Alternativ kann sie eine davon abweichende Form annehmen. Bei einer gleichzeitigen Ansteuerung mehrerer Aktuatoren, kann eine von einer reinen Kreisbahn abweichende Gerätetrajektorie um den Patientenkopf erzielt werden. Der Patientenkopf wird mit dem Aufbiss (7) und der Kopffixierung (6) im Röntgengerät positioniert. Das computergestützte DVT-System (1) umfasst eine Bedienungseinheit (5), vorzugsweise einen Rechner (8) oder eine Recheneinheit, die mit dem Röntgengerät (2) verbunden werden kann, und vorzugsweise eine Anzeige (9), u.a. um die Datensätze zu visualisieren. Der Rechner (8) kann über ein lokales Netzwerk (nicht gezeigt) oder alternativ über das Internet mit dem Röntgengerät (2) verbunden werden. Der Rechner (8) kann Teil einer Cloud sein. Alternativ kann der Rechner (3) in das Röntgengerät (2) integriert werden. Die Berechnungen können alternativ in der Cloud stattfinden. Der Rechner (8) führt das Computerprogramm aus und liefert die Datensätze, u.a. auch für die Visulisierung auf der Anzeige (9). Die Anzeige (9) kann räumlich von dem Röntgengerät (2) getrennt sein. Der Rechner (8) kann vorzugsweise auch das Röntgengerät (2) steuern. Alternativ können separate Rechner für die Steuerung und die Rekonstruktion benutzt werden.

Gemäß der vorliegenden Erfindung können die Datensätze, die durch die oben aufgeführte Ausführungsformen erzeugt werden, zur Visualisierung, insbesondere für diagnostische Zwecke, einem Arzt vorgelegt werden, vorzugsweise mittels der Anzeige (9) oder eines Ausdrucks.

### Rekonstruktionsverfahren

Das erste Rekonstruktionsverfahren und das finale Rekonstruktionsverfahren können gleiche oder unterschiedliche Schritte zur Generierung des 3D Volumens aus dem Sinogramm umfassen. In einer bevorzugten Ausführungsform umfassen beiden Rekonstruktionsverfahren einen Rekonstruktionsschritt nach Feldkamp. In einer weiteren Ausführungsform umfasst das erste Rekonstruktionsverfahren einen Rekonstruktionsschritt nach Feldkamp und das finale Rekonstruktionsverfahren umfasst einen algebraischen Rekonstruktionsschritt, wie zum Beispiel SART (simultaneous algebraic reconstruction technique).

### Benutzerinteraktion

In einer weiteren Ausführungsform sind die Rekonstruktionsparameter, oder die Korrekturschritte oder deren Parametrisierung, oder die Vor- oder Nachbearbeitungsschritte oder deren Parametrisierung für das finale Rekonstruktionsverfahrens vom Benutzer einstellbar, zum Beispiel über einer Benutzungsoberfläche. Dies hat den Vorteil, dass der Benutzer den gewünschten Bildeindruck für die Diagnose einstellen kann. Die gleichen Einstellungen können für das erste Rekonstruktionsverfahren vom Benutzer nicht direkt verändert werden, da sie entscheidend für das Ergebnis des MAC-Verfahrens sind. Sie können jedoch von möglichen Einstellungen des MAC-Verfahrens abhängen und somit indirekt verändert werden, wie zum Beispiel die maximale Korrekturgenauigkeit, die Größe der maximal korrigierbaren Patentenbewegungen, oder die maximale Rechenzeit des MAC-Verfahrens. Bei dem Benutzer kann es sich um einen Arzt handeln, welcher die Diagnose durchführt, oder diejenige Person, die mit dem Patienten die DVT-Aufnahme am Röntgengerät durchführt.

### Computergestütztes Verfahren

Das erste Rekonstruktionsverfahren und das finale Rekonstruktionsverfahren können auf der gleichen Hardware oder auf unterschiedlicher Hardware ausgeführt werden. Die Hardware kann sich durch ihre Rechenleistung, die Größe ihres Speichers oder den Ort ihrer Installation unterscheiden. Die Hardware kann sich lokal in oder in der Nähe des Röntgengeräts oder in einer Cloud befinden. Dies bietet den Vorteil, dass die Hardware auf die jeweiligen unterschiedlichen Anforderungen der beiden Rekonstruktionsverfahren angepasst werden kann. Dies erspart Rechenzeit und Kosten für die Anschaffung oder den Betrieb der Hardware. Das erste Rekonstruktionsverfahren und das finale Rekonstruktionsverfahren können beide auf einer oder mehreren CPUs und/oder auf einer oder mehreren GPUs durchgeführt werden.

### Datensatz Visualisierung / Diagnose

Der Zeitpunkt der Berechnung von Schritt S3 kann deutlich hinter dem Zeitpunkt der Berechnung von Schritt S2 liegen oder beide Schritte werden direkt nacheinander ausgeführt. Das finale Rekonstruktionsverfahren kann auch mehrfach ausgeführt werden. Die deutlich spätere Ausführung von Schritt S3 bietet den Vorteil, dass das finale Volumen so nachträglich angepasst werden kann. Die Anpassung erfolgt durch Einstellung der Rekonstruktionsparameter oder der Korrekturschritte oder deren Parametrisierung oder der Vor- oder Nachbearbeitungsschritte oder deren Parametrisierung für das finale Rekonstruktionsverfahrens. Dies kann manuell durch den Benutzer oder automatisch durch eine Software erfolgen und dient der verbesserten Darstellung des finalen Volumens für eine spezielle Diagnose oder einen speziellen Datenexport.

### Datenkonsistenzbedingungen

In einer Ausführungsform erfolgt die geometrische Kalibrierung in Schritt S2 durch Variation der Projektionsgeometrie und Bewertung dergleichen anhand eines Ähnlichkeitsmaßes zwischen einem simuliertem Sinogramm eines ersten Volumens und dem Sinogramm, wobei das simulierte Sinogramm aus dem rekonstruierten ersten Volumen unter Verwendung der variierten Projektionsgeometrie berechnet wird und das erste Volumen unter Verwendung der variierten Projektionsgeometrie mit dem ersten Rekonstruktionsverfahren aus dem Sinogramm berechnet wird. Die Datenkonsistenz wird durch die Verwendung des Ähnlichkeitsmaßes erreicht. Mögliche Ähnlichkeitsmaße oder invers zu betrachtende Fehlermaße sind: Mean Square Error, Mean Absolute Difference, Normalized Cross-correlation, Gradient Correlation, Gradient Information, Gradient Information with linear Scaling, Gradient Orientation, Mutual Information.

In einer weiteren Ausführungsform erfolgt die geometrische Kalibrierung durch Variation der Projektionsgeometrie und Bewertung dergleichen anhand einer Bildqualitätsmetrik auf dem ersten Volumen. Mögliche Bildqualitätsmetriken bewerten die Volumenschärfe oder den Volumenkontrast. Sie können als Schärfemaße auf dem ersten Volumen definiert sein, wie z.B. die Gradientenvarianz oder die Gradientennorm, oder durch Glattheitsbedingungen auf dem ersten Volumen definiert sein, wie zum Beispiel die Entropie der Grauwerte, die Varianz der Grauwerte oder die Total Variation.

In einer weiteren Ausführungsform erfolgt die geometrische Kalibrierung durch Variation der Projektionsgeometrie mithilfe eines iterativen Rekonstruktionsverfahren, welches die Differenz zwischen einem simulierten Sinogramm des rekonstruierten ersten Volumens und Sinogramm iterativ mit einem der genannten Ähnlichkeitsmaße oder Fehlermaße bewertet und verringert.

## Patentansprüche

1. Computer gestütztes Verfahren zur Rekonstruktion einer DVT Aufnahme im dentalen Bereich, umfassend die folgenden Schritte:
(S1) Bereitstellen eines Sinogramms und einer initialen Projektionsgeometrie;
(S2) Geometrische Kalibrierung durch Variation der Projektionsgeometrie und
Bewertung der variierten Projektionsgeometrie mittels Datenkonsistenzbedingungen,
welche aus einem ersten Volumen abgeleitet werden, welches mittels der variierten Projektionsgeometrie in einem ersten Rekonstruktionsverfahren aus dem Sinogramm erzeugt wird, wobei das erste Rekonstruktionsverfahren erste
Rekonstruktionsparameter verwendet;
(S3) Erzeugung eines finalen Volumens mit einem finalen Rekonstruktionsverfahren mit der variierten Projektionsgeometrie und finalen Rekonstruktionsparametern aus dem Sinogramm, **gekennzeichnet dadurch, dass**
das erste Rekonstruktionsverfahren und das finale Rekonstruktionsverfahren identische Rekonstruktionsverfahren sind, und die ersten Rekonstruktionsparameter sich von den finalen Rekonstruktionsparametern in mindestens einem oder mehreren Werten der Rekonstruktionsparameter unterscheiden; oder
das das erste Rekonstruktionsverfahren und das finale Rekonstruktionsverfahren unterschiedliche Rekonstruktionsverfahren sind, und die ersten Rekonstruktionsparameter sich von den finalen Rekonstruktionsparametern in mindestens einem oder mehreren der Rekonstruktionsparameter oder deren Werten unterscheiden.

2. Verfahren nach Anspruch 1, **gekennzeichnet dadurch, dass** mindestens einer der ersten Rekonstruktionsparameter die Auflösung des ersten Volumens beschreibt und mindestens einer der finalen Rekonstruktionsparametern die Auflösung des finalen Volumens beschreibt, wobei die Auflösung des ersten Volumens sich von der Auflösung des finalen Volumens unterscheidet.

3. Verfahren nach einem der vorangegangenen Ansprüche, **gekennzeichnet dadurch, dass** mindestens einer der ersten Rekonstruktionsparameter eine erste zeitliche Unterabtastung des Sinogramms beschreibt und mindestens einer der finalen Rekonstruktionsparametern eine zweite zeitliche Unterabtastung des Sinogramms beschreibt, wobei die erste zeitliche Unterabtastung des Sinogramms sich von der zweiten zeitlichen Unterabtastung des Sinogramms unterscheidet.

4. Verfahren nach einem der vorangegangenen Ansprüche, **gekennzeichnet dadurch, dass** mindestens einer der ersten Rekonstruktionsparameter eine erste örtliche Unterabtastung des Sinogramms beschreibt und mindestens einer der finalen Rekonstruktionsparametern eine zweite örtliche Unterabtastung des Sinogramms beschreibt, wobei die erste örtliche Unterabtastung des Sinogramms sich von der zweiten örtlichen Unterabtastung des Sinogramms unterscheidet.

5. Verfahren nach einem der vorangegangenen Ansprüche, **gekennzeichnet dadurch, dass** mindestens einer der ersten Rekonstruktionsparameter die Größe und/oder Lage des ersten Volumens beschreibt und mindestens einer der finalen Rekonstruktionsparametern die Größe und/oder Lage des finalen Volumens beschreibt, wobei die Größe und/oder Lage des ersten Volumens sich von der Größe und/oder Lage des finalen Volumens unterscheidet.

6. Verfahren nach einem der vorangegangenen Ansprüche, **gekennzeichnet dadurch, dass** das erste Rekonstruktionsverfahrens einen Schritt zum Korrigieren von Bildartefakten einschließt und das finalen Rekonstruktionsverfahrens denselben Korrekturschritt nicht einschließt; oder das finale Rekonstruktionsverfahrens einen Schritt zum Korrigieren von Bildartefakten einschließt und das erste Rekonstruktionsverfahrens denselben Korrekturschritt nicht einschließt; oder beide der ersten Rekonstruktionsverfahrens und des finalen Rekonstruktionsverfahrens jeweils einen Schritt zum Korrigieren von Bildartefakten einschließen, wobei diese unterschiedlich sind, oder jeweils den gleichen Schritt zum Korrigieren von on Bildartefakten einschließen, wobei diese unterschiedlich parametrisiert sind.

7. Verfahren nach dem vorangegangenen Anspruch, **gekennzeichnet dadurch, dass** der Schritt zum Korrigieren von Bildartefakten Metallartefakte oder Kegelstrahlartefakte oder Streustrahlartefakte reduziert.

8. Verfahren nach einem der vorangegangenen Ansprüche, **gekennzeichnet dadurch, dass** das finale Rekonstruktionsverfahren einen Schritt zur Nachbearbeitung des finalen Volumens einschließt und das erste Rekonstruktionsverfahren denselben Nachbearbeitungsschritt nicht einschließt; oder beide der ersten Rekonstruktionsverfahren und des finalen Rekonstruktionsverfahren jeweils einen Schritt zur Nachbearbeitung des ersten und des finalen Volumens einschließen, wobei diese unterschiedlich sind, oder jeweils den gleichen Nachbearbeitungsschritt einschließen, wobei diese unterschiedlich parametrisiert sind.

9. Verfahren nach einem der vorangegangenen Ansprüche, **gekennzeichnet dadurch, dass** das erste Rekonstruktionsverfahren einen Schritt zur Vorbearbeitung des Sinogramms oder zur Nachbearbeitung des ersten Volumens einschließt und das finalen Rekonstruktionsverfahren denselben Vor- oder Nachbearbeitungsschritt nicht einschließt; oder beide der ersten Rekonstruktionsverfahren und des finalen Rekonstruktionsverfahren jeweils einen Schritt zur Vorbearbeitung des Sinogramms oder zur Nachbearbeitung des ersten und des finalen Volumens einschließen, wobei diese unterschiedlich sind, oder jeweils den gleichen Vor- oder Nachbearbeitungsschritt einschließen, wobei diese unterschiedlich parametrisiert sind

10. Verfahren nach dem vorangegangenen Anspruch 8, **gekennzeichnet dadurch, dass** der Nachbearbeitungsschritt zur Grauwertanpassung oder zur Kanten-erhaltenden Glättung bzw. Rauschreduktion dient.

11. Verfahren nach dem vorangegangenen Anspruch 9, **gekennzeichnet dadurch, dass** der Vor- und Nachbearbeitungsschritt zur Rauschreduktion oder zur Kanten-erhaltenden Rauschreduktion oder zur Kanten-Verstärkung oder zur Unterdrückung von Trunkierungsartefakten dient.

12. Verfahren nach einem der vorangegangenen Ansprüchen 6 oder 7, **gekennzeichnet dadurch, dass** es sich bei der geometrischen Kalibrierung um ein iteratives Verfahren handelt und der Schritt zum Korrigieren von Bildartefakten oder dessen Parametrisierung während der Iterationen verändert werden.

13. Verfahren nach einem der vorangegangenen Ansprüchen 8 bis 11, **gekennzeichnet dadurch, dass** es sich bei der geometrischen Kalibrierung um ein iteratives Verfahren handelt und der Schritt zur Vor- und Nachbearbeitung oder dessen Parametrisierung während der Iterationen verändert werden.

14. Verfahren nach einem der vorangegangenen Ansprüche, **gekennzeichnet dadurch, dass** es sich bei der geometrischen Kalibrierung um ein iteratives Verfahren handelt und die ersten Rekonstruktionsparameter während der Iterationen verändert werden.

15. Computerprogramm umfassend computerlesbaren Code, das wenn es von einem computergestützten DVT-System (1) ausgeführt wird dieses veranlasst, die Verfahrensschritte einer der vorhergehenden Verfahrensansprüche auszuführen.

16. Computerlesbares Speichermedium das das Computerprogramm nach Anspruch 15 speichert.

17. Computergestütztes DVT-System (1) umfassend ein Röntgengerät (2) und eine Recheneinheit (8), die zur Ausführung des Computerprogramms nach Anspruch 15 konfiguriert ist.

18. Die Verwendung eines Datensatzes zur Visualisierung der durch einen der vorangegangen Ansprüche 1 bis 14 zur Verfügung gestellt wurde.
